# EUROPÄISCHE PATENTSCHRIFT

(11) **EP 2 170 005 B1**
(45) Veröffentlichungstag und Bekanntmachung des Hinweises auf die Patenterteilung: **24.02.2016**
(21) Anmeldenummer: 09168596.6
(22) Anmeldetag: 25.08.2009
(51) Int. Cl.: H04W 64/00, G01S 5/02

(54) **Verfahren zum Erzeugen von geographischen Identifikationspunkten**
Method for creating geographical identification points
Procédé de production de points d'identification géographiques

(30) Priorität: 30.09.2008 DE 102008049493
(43) Veröffentlichungstag der Anmeldung: 31.03.2010
(73) Patentinhaber: Vodafone GmbH, 40549 Düsseldorf (DE)
(72) Erfinder: Christian Robl, 94560 Offenburg (DE)
(74) Vertreter: Müller, Thomas

(56) Entgegenhaltungen:
- US-A1- 2006 293 062
- XIAOYONG CHAI ET AL: "Reducing the Calibration Effort for Probabilistic Indoor Location Estimation" IEEE TRANSACTIONS ON MOBILE COMPUTING, IEEE SERVICE CENTER, LOS ALAMITOS, CA, US, Bd. 6, Nr. 6, 1. Juni 2007 (2007-06-01), Seiten 649-662, XP011179709 ISSN: 1536-1233
- JUNIUS M ET AL: "New methods for processing GSM radio measurement data: applications for locating, handover, and network management" VEHICULAR TECHNOLOGY CONFERENCE, 1994 IEEE 44TH STOCKHOLM, SWEDEN 8-10 JUNE 1994, NEW YORK, NY, USA,IEEE, 8. Juni 1994 (1994-06-08), Seiten 338-342, XP010123099 ISBN: 978-0-7803-1927-1

## Beschreibung

Die vorliegende Erfindung betrifft zunächst ein Verfahren zum Erzeugen von geographischen Identifikationspunkten gemäß dem Oberbegriff von Patentanspruch 1. Weiterhin betrifft die Erfindung ein Verfahren zum Bereitstellen eines Systems zum Erzeugen von Verkehrsinformationen gemäß dem Oberbegriff von Patentanspruch 10.

Derartige Verfahren können beispielsweise im Zusammenhang mit der Erzeugung von Stauvorhersagen, der Bestimmung von Reisezeiten eines Fahrzeugs von einem Startpunkt zu einem Endpunkt, und dergleichen eingesetzt werden.

Mit zunehmender Verbreitung der Mobilfunktechnologie ist zwischenzeitlich eine ganze Anzahl von Lösungen bekannt geworden, bei denen die Erzeugung von Verkehrsinformationen auf Basis der Mobilfunktechnologie erfolgt.

In der US 5,732,383 B beispielsweise ist ein Verfahren zum Bestimmen von Verkehrsbedingungen auf Straßen, die sich in einem Mobilfunknetz befinden, beschrieben. Dabei wird eine Lösung bereitgestellt, mit der Nutzern Informationen über potentielle Verkehrsstörungen auf Straßen bereitgestellt werden können, ohne dass eine separate, kostenintensive Infrastruktur zum Sammeln von Informationen bereitgestellt werden muss. Durch eine Analyse von gegenwärtigen Echtzeit-Informationen und vergangenen Informationen mittels des drahtlosen Kommunikationsnetzwerks sollen Verkehrsbedingungen auf Durchgangsstraßen, die sich in bestimmten Zellen des Kommunikationsnetzwerks befinden, bestimmbar sein.

In der EP 1 435 080 B1 wird eine Lösung beschrieben, bei der spezifische Informationen von mobilen elektronischen Endgeräten, insbesondere solche, die bei deren Betrieb ohnehin anfallen, genutzt werden können, um daraus deren Fortbewegungszeit zu ermitteln, ohne dass dafür eine spezielle Infrastruktur erforderlich wäre. Dadurch ist das Verfahren überall dort einsetzbar, wo sich entsprechende Endgeräte befinden. Ein Grundgedanke dieser bekannten Lösung besteht darin, dass Angaben über Fortbewegungszeiten gewonnen werden können, ohne dass die mobilen elektronischen Endgeräte permanent und genau lokalisiert werden müssen. Wenn die Fortbewegungszeit wenigstens eines mobilen elektronischen Endgeräts zwischen einem Ausgangspunkt A und einem räumlich davon getrennten Endpunkt E ermittelt werden soll, werden in einem ersten Schritt zunächst spezifische Informationen wenigstens eines am Ausgangspunkt A befindlichen mobilen elektronischen Endgeräts ermittelt und jeweils mit einer entsprechenden Zeitmarke TA verknüpft. Auf diese Weise lässt sich bestimmten, dass sich das mobile elektronische Endgerät zu einem bestimmten Zeitpunkt, der der Zeitmarke TA entspricht, am Ausgangspunkt A befunden hat. Auf gleiche Weise werden gemäß einem weiteren Schritt spezifische Informationen wenigstens eines am festgelegten Endpunkt E befindlichen mobilen elektronischen Endgeräts ermittelt und jeweils mit einer Zeitmarke TE verknüpft. Auf diese Weise kann festgelegt werden, dass sich ein solches mobiles elektronisches Endgerät zu einem bestimmten Zeitpunkt, der der Zeitmarke TE entspricht, am Endpunkt E befunden hat. Die auf diese Weise ermittelten spezifischen Informationen des wenigstens einen am Ausgangspunkt A und am Endpunkt E befindlichen mobilen elektronischen Endgeräts werden in einer netzwerkseitig vorgesehenen Rechnereinheit elektronisch miteinander verglichen. Auf diese Weise wird überprüft, ob die jeweiligen spezifischen Informationen, und damit letztendlich auch die dazugehörigen Endgeräts übereinstimmen. Wenn die spezifischen Informationen eines mobilen elektronischen Endgeräts am Ausgangspunkt A und am Endpunkt E übereinstimmen, bedeutet dies, dass sich ein und dasselbe Endgerät sowohl am Ausgangspunkt A als auch am Endpunkt E befunden hat. Wird eine solche Übereinstimmung festgestellt, wird in der Rechnereinheit elektronisch die Zeitdifferenz TE-TA zwischen der Zeitmarke TE des Endgeräts am Endpunkt und der Zeitmarke TA des Endgeräts am Ausgangspunkt A gebildet. Aus der entstehenden Zeitdifferenz wird anschließend die Fortbewegungszeit des mobilen elektronischen Endgeräts zwischen dem Ausgangspunkt A und dem räumlich davon getrennten Endpunkt E ermittelt.

In der DE 10 2006 027 270 A1, von der die vorliegende Erfindung ausgeht, ist eine weitere Lösung zur Ortsbestimmung von mobilen Endgeräten in einem Mobilfunknetz beschrieben. Wenn mit einem Mobiltelefon telefoniert wird, erfolgt die Kommunikation in einem solchen Mobilfunknetz innerhalb der Zellen in der Regel über so genannte Basisstationen, wobei jeder Mobilfunkzelle eine Basisstation (BTS) zugeordnet ist. Wenn die mobilen Endgeräte weiterhin mit einer Positionsbestimmungseinrichtung, beispielsweise einem GPS-Empfänger, ausgestaltet sind, können an bestimmten Orten bestimmte Muster von BTS-Signalstärken zunächst gemessen und gleichzeitig auf diesen bestimmten Ort bezogen abgespeichert werden. Dies kann im Zusammenhang mit der Erzeugung von Verkehrsinformationen beispielsweise erreicht werden, indem zu erfassende Straßen mit einer entsprechenden Messeinrichtung befahren werden, welche die BTS-Signalstärken und die dazugehörigen Positionen aufzeichnet. In einem weiteren Schritt werden diese Daten nach einer eindeutigen Empfangsmuster-Abfolge untersucht und deren Position bestimmt. Wenn zu einem späteren Zeitpunkt ein Muster von Signalstärken zu einem mobilen Endgerät erkannt wird, kann auf diese Weise der Ort ermittelt werden, an dem sich dieses mobile Endgerät befindet.

Problematisch bei dieser bekannten Lösung ist, dass unterschiedliche Typen mobiler elektronischer Endgeräte an ein und demselben Ort unterschiedliche Signalstärkemessungen liefern können, so dass an ein und demselben Ort je nach Endgerätetyp unterschiedliche Signalstärkemuster entstehen können. Weiterhin ist das Ausprobieren der Bedingungen zeitintensiv. Auch ist die Dimension der Bedingungen eingeschränkt. Darüber hinaus sind die Verwendung von Vorwissen und eine Kenntnis über die räumliche Lage der Funkzellen erforderlich. Zudem muss eine Befahrung einer Verkehrsinfrastruktur mit einer Messeinrichtung, beispielsweise einer GSM-Messeinrichtung, erfolgen, um daraus geographische Identifikationspunkte abzuleiten. Nachteil dabei ist, dass das eingesetzte Equipment eine spezifische Empfangscharakteristik aufweist, die nicht unbedingt repräsentativ ist, und die damit nicht zu aussagefähigen Punkten führt. Schließlich ist auch ein hoher Aufwand bei Modifikationen und Umbauten des Mobilfunknetzes erforderlich.

Ausgehend vom genannten Stand der Technik liegt der vorliegenden Erfindung die Aufgabe zu Grunde, die Verfahren der eingangs genannten Art derart weiterzubilden, dass die zuvor beschriebenen Nachteile vermieden werden können. Insbesondere soll ein Verfahren geschaffen werden, mit dem netzwerkseitig eindeutige geographische Identifikationspunkte für spätere Anwendungen erzeugt werden können.

Diese Aufgabe wird erfindungsgemäß gelöst durch das Verfahren zum Erzeugen von geographischen Identifikationspunkten mit den Merkmalen gemäß dem unabhängigen Patentanspruch 1, sowie durch das Verfahren zum Bereitstellen einer geographischen Struktur zum Erzeugen von Verkehrsinformationen mit den Merkmalen gemäß dem unabhängigen Patentanspruch 11. Weitere Merkmale und Details der Erfindung ergeben sich aus den Unteransprüchen, der Beschreibung sowie den Zeichnungen. Dabei gelten Merkmale und Details, die im Zusammenhang mit dem erfindungsgemäßen Verfahren zum Erzeugen von geographischen Identifikationspunkten beschrieben sind, selbstverständlich auch im Zusammenhang mit dem Verfahren zum Bereitstellen einer geographischen Struktur zum Erzeugen von Verkehrsinformationen, und jeweils umgekehrt.

Gemäß dem ersten Aspekt der Erfindung wird ein Verfahren zum Erzeugen von geographischen Identifikationspunkten, insbesondere für den Einsatz bei der Erzeugung von Verkehrsinformationen, bereitgestellt, unter Nutzung eines aus Funkzellen aufgebauten zellularen Mobilfunknetzes, wobei dem Mobilfunknetz eine Anzahl mobiler elektronischer Endgeräte zugeordnet ist und wobei, insbesondere während des Betriebs der mobilen elektronischen Endgeräte, in zeitlichen Abständen Netzwerkparameterdaten, insbesondere in Form von Netzwerk-Messreports

(Network Measurement Reports - NMR), von den elektronischen Endgeräten übertragen werden. Das Verfahren ist erfindungsgemäß dadurch gekennzeichnet, dass die geographischen Identifikationspunkte netzwerkseitig aus den übertragenen Netzwerkparameterdaten der mobilen elektronischen Endgeräte erzeugt werden, dass die übertragenen Netzwerkparameterdaten der mobilen elektronischen Endgeräte, insbesondere netzwerkseitig in einer Rechnereinheit, auf wenigstens einen bestimmten Parameter überprüft werden, dass bei Feststellung einer Parameteränderung zwischen zwei Übertragungen von Netzwerkparameterdaten um einen vorgegebenen Wert, der Parameteränderung und/oder den zuletzt übertragenen Netzwerkparameterdaten eine geographische Position zugeordnet wird und dass die mit der geographischen Position verknüpften Werte der Parameteränderung und/oder der zuletzt übertragenen Netzwerkparameterdaten als geographische Identifikationspunkte in einer, insbesondere zentralen, Datei abgespeichert werden.

Gemäß der vorliegenden Erfindung wird ein Verfahren zum Erzeugen von geographischen Identifikationspunkten bereitgestellt. Unter einem Identifikationspunkt ist gemäß der vorliegenden Erfindung nicht nur einen ganz bestimmter geographischer Punkt zu verstehen. Vielmehr kann es sich dabei auch um einen größeren geographischen Bereich handeln.

Das erfindungsgemäße Verfahren ist insbesondere für den Einsatz bei der Erzeugung von Verkehrsinformationen geeignet, wobei die Erfindung jedoch nicht auf diesen einen bestimmten Einsatzzweck beschränkt ist. Natürlich sind auch andere Einsatzmöglichkeiten denkbar.

Das erfindungsgemäße Verfahren läuft unter Nutzung eines aus Funkzellen aufgebauten zellularen Mobilfunknetzes ab, wobei dem Mobilfunknetz eine Anzahl mobiler elektronischer Endgeräte zugeordnet ist. Derartige Mobilfunknetze sind im Stand der Technik hinlänglich bekannt, so dass auf deren konstruktive Ausgestaltung vorliegend nicht weiter eingegangen werden muss. Bei den mobilen elektronischen Endgeräten solcher Mobilfunknetze kann es sich beispielsweise um Mobiltelefone oder dergleichen handeln.

Während des Betriebs der mobilen elektronischen Endgeräte werden in zeitlichen Abständen Netzwerkparameterdaten von den elektronischen Endgeräten übertragen. Beispielsweise, jedoch nicht ausschließlich, kann es sich bei den Netzwerkparameterdaten um so genannten Netzwerk-Messreports (Network Measurement Reports - NMR) handeln. In einem Mobilfunknetz gemäß dem GSM- und/oder UMTS-Funknetzstandard (GSM: Global System Mobile; UMTS: Universal Mobile Telecommunications System) werden die Netzwerkparameterdaten vorzugsweise in einem solchen Messbericht übertragen.

So wird beispielsweise bei einer Kommunikationsverbindung in einem Mobilfunknetz gemäß dem GSM-Funknetzstandard etwa alle 500 ms ein solcher Netzwerk-Messreport von dem mobilen Endgerät zu der einer Funkzelle zugeordneten Basisstation (Base Station Transceiver (BTS)) gesendet. Dieser Netzwerk-Messreport enthält unter anderem das sogenannte Timing Advance (TA) und die Empfangsfeldstärken der verbundenen Funkzelle sowie den zugehörigen Nachbarfunkzellen. Vorteilhafterweise werden nun diese Daten genutzt, um den geographischen Aufenthaltsort des mobilen Endgerätes zu bestimmen.

Im Gegensatz zu der aus dem Stand der Technik bekannten Lösung ist erfindungsgemäß nunmehr vorgesehen, dass die geographischen Identifikationspunkte netzwerkseitig aus den übertragenen Netzwerkparameterdaten der mobilen elektronischen Endgeräte erzeugt werden. Die Erzeugung der geographischen Identifikationspunkte, die insbesondere auf einer Musteridentifizierung und Musterbestimmung beruht, wird nunmehr von den mobilen elektronischen Endgeräten in das Mobilfunknetz verlagert. Wie dies im Einzelnen geschieht, wird nachfolgend in größerem Detail erläutert.

Zunächst werden die übertragenen Netzwerkparameterdaten der mobilen elektronischen Endgeräte netzwerkseitig in einer Rechnereinheit auf wenigstens einen bestimmten Parameter überprüft. Die Netzwerkparameterdaten, beispielsweise die Netzwerk-Messreports, von allen in dem Mobilfunknetz aktiven elektronischen Endgeräten laufen in zeitlichen Abständen, beispielsweise alle 0,5 Sekunden, in der Rechnereinheit ein. Bei der Rechnereinheit kann es sich beispielsweise um einen Basisstationen-Kontroller (Base Station Controller - BSC) handeln. Dies ist beispielsweise erforderlich, um festzustellen, welche Funkzelle für ein bestimmtes mobiles elektronisches Endgerät gerade zuständig ist. Erfindungsgemäß werden die auf die Rechnereinheit übertragenen Netzwerkparameterdaten nunmehr in besonderer Weise überprüft und ausgewertet.

Hierzu ist vorgesehen, dass die Netzwerkparameterdaten, beispielsweise die Netzwerk-Messreports, auf bestimmte Kriterien hin untersucht werden. Grundsätzlich ist die Erfindung weder auf eine bestimmte Anzahl von Parametern, noch auf bestimmte Parametertypen beschränkt. Einige vorteilhafte, nicht ausschließliche Beispiele hierzu werden im weiteren Verlauf der Beschreibung näher erläutert.

Wird netzwerkseitig in der Rechnereinheit eine Parameteränderung zwischen zwei, insbesondere aufeinanderfolgenden, Übertragungen von Netzwerkparameterdaten um einen vorgegebenen Wert festgestellt, wird der Parameteränderung und/oder den zuletzt übertragenen Netzwerkparameterdaten eine geographische Position zugeordnet. Erfindungsgemäß sollen solche Parameteränderungen berücksichtigt werden, die eine signifikante Änderung darstellen. Wann von einer signifikanten Änderung gesprochen werden kann, kann bei unterschiedlichen Parametertypen unterschiedlich sein, so dass die Erfindung nicht auf bestimmte Werte beschränkt ist. Einige diesbezügliche vorteilhafte, jedoch nicht ausschließliche Beispiele werden im weiteren Verlauf der Beschreibung näher erläutert. Beispielsweise könnte unter einer signifikanten Änderung verstanden werden, wenn ein Signal plötzlich sehr viel schwächer wird, oder aber ganz verschwindet. Dies könnte beispielsweise geschehen, wenn sich das Endgerät in einer Abdeckung befindet, wenn sich das Endgerät in einen Tunnel bewegt, oder dergleichen.

Sobald eine solche Parameteränderung festgestellt wird, erfolgt die Verknüpfung mit einer geographischen Position. Dies kann auf unterschiedliche Weise erfolgen, so dass die Erfindung nicht auf bestimmte Ausführungsformen beschränkt ist. Auch hierzu werden im weiteren Verlauf einige vorteilhafte, jedoch nicht ausschließliche Beispiele in größerem Detail beschrieben.

Schließlich werden die mit einer geographischen Position verknüpften Werte der Parameteränderung und/oder der zuletzt übertragenen Netzwerkparameterdaten als geographische Identifikationspunkte in einer, insbesondere zentralen, Datei abgespeichert. Aus der zentralen Datei können dann Wertepaare "bestimmte Parameterwerte an einem bestimmten Ort" ausgelesen werden, bei denen es sich um die geographischen Identifikationspunkte handelt. Diese können später für weitere Anwendungen genutzt werden, beispielsweise zur Verkehrsbestimmung.

Besonders vorteilhaft kann das erfindungsgemäße Verfahren, welches ein, insbesondere automatisches, Definieren von eindeutigen geographischen Identifikationspunkten aus Netzwerkparameterdaten, beispielsweise aus Netzwerk-Messreports, von mobilen elektronischen Endgeräten, beispielsweise von Mobilfunkendgeräten, ermöglicht, zur Bestimmung der Verkehrsflussgeschwindigkeiten auf Straßen, beispielsweise in Form einer Staumeldungsgenerierung, einer Verkehrsvorhersage oder dergleichen, herangezogen und verwendet werden.

Der Kern der vorliegenden Erfindung beruht auf der automatischen Auswertung von Netzwerkparameterdaten, wie beispielsweise der Feldstärke und Timing Advance zur Serving Cell und Nachbarzellenfeldstärken, oder dergleichen. Häufig auftretende Muster können dadurch gefunden und als Identifikationspunkte verwendet werden. Im Zusammenhang mit der Erzeugung von Verkehrsinformationen gilt dies insbesondere dann, wenn sich die Muster auf den gewünschten Verkehrsfluss beziehen.

Gemäß einer bevorzugten Ausführungsform der Erfindung wird ein Verfahren zum Erzeugen von geographischen Identifikationspunkten, insbesondere für den Einsatz bei der Erzeugung von Verkehrsinformationen, bereitgestellt, unter Nutzung eines aus Funkzellen aufgebauten zellularen Mobilfunknetzes, wobei dem Mobilfunknetz eine Anzahl mobiler elektronischer Endgeräte zugeordnet ist und wobei während des Betriebs der mobilen elektronischen Endgeräte in zeitlichen Abständen Netzwerk-Messreports (Network Measurement Reports - NMR) von den elektronischen Endgeräten übertragen werden, dadurch gekennzeichnet, dass die geographischen Identifikationspunkte netzwerkseitig aus den übertragenen Netzwerk-Messreports der mobilen elektronischen Endgeräte erzeugt werden, dass die übertragenen Netzwerk-Messreports der mobilen elektronischen Endgeräte netzwerkseitig in einer Rechnereinheit auf wenigstens einen bestimmten Parameter überprüft werden, dass bei Feststellung einer Parameteränderung zwischen zwei aufeinanderfolgenden Netzwerk-Messreports um einen vorgegebenen Wert, der Parameteränderung und/oder dem zweiten Netzwerk-Messreport eine geographische Position zugeordnet wird und dass die mit einer geographischen Position verknüpften Werte der Parameteränderung und/oder des zweiten Netzwerk-Messreports als geographische Identifikationspunkte in einer zentralen Datei abgespeichert werden.

Vorteilhaft können die übertragenen Netzwerkparameterdaten der mobilen elektronischen Endgeräte netzwerkseitig in der Rechnereinheit auf die Häufigkeit des Vorhandenseins des wenigstens einen bestimmten Parameters überprüft werden, wobei bei Erreichen oder Überschreiten eines bestimmten Häufigkeitsschwellwerts die übertragenen Netzwerkparameterdaten der mobilen elektronischen Endgeräte netzwerkseitig in der Rechnereinheit auf Änderungen des wenigstens einen bestimmten Parameters überprüft werden. Auf diese Weise kann zunächst sichergestellt werden, dass die Parameter mit den größten Häufigkeiten verwendet werden. Sobald diese Parameter identifiziert sind, kann eine entsprechende Häufung der entsprechenden Parameter über mehrere mobile elektronische Endgeräte gefunden werden. Vorteilhaft sind dabei solche elektronischen Endgeräte, die mehrere der in Frage kommenden Parameter und deren Abfolge aufweisen.

Vorteilhaft können die übertragenen Netzwerkparameter die IMEI-Nummer der mobilen elektronischen Endgeräte umfassen, wobei über die IMEI-Nummer Gerätetypen identifiziert werden und wobei diese Informationen bei der Erzeugung der geographischen Identifikationspunkte ebenfalls verwendet werden. Die IMEI-Nummer (International Mobile Equipment Identity (IMEI)) ist eine eindeutige mehrstellige, beispielsweise 15-stellige, Seriennummer, anhand derer jedes elektronische Endgerät nach dem GSM- oder UMTS-Standard eindeutig identifiziert werden kann. Anders ausgedrückt, über die IMEI-Nummer der Geräte können Gerätetypen identifiziert werden, und diese Informationen ebenfalls zur Klassifizierung beziehungsweise Clusterbildung herangezogen werden.

Vorteilhaft können die übertragenen Netzwerkparameterdaten der mobilen elektronischen Endgeräte netzwerkseitig auf mehr als einen bestimmten Parameter überprüft werden, beispielsweise auf zwei oder mehr Parameter.

Wie eingangs schon ausgeführt wurde, ist die Erfindung nicht auf die Überprüfung bestimmter Parametertypen beschränkt. Vorteilhaft können die übertragenen Netzwerkparameterdaten der mobilen elektronischen Endgeräte netzwerkseitig auf die Signalstärke überprüft werden. Beispielsweise kann dabei eine Überprüfung hinsichtlich der empfangenen elektromagnetischen Feldstärke und/oder der Signallaufzeit, vorzugsweise dem sogenannten Timing Advance (TA), insbesondere zur Serving Cell, und Nachbarzellenfeldstärken, erfolgen.

Dies soll anhand eines vorteilhaften, jedoch nicht ausschließlichen Beispiels verdeutlicht werden, Beispielsweise können die Netzwerkparameterdaten, etwa die Netzwerk-Messreports, beispielsweise während der Benutzung des Endgeräts, etwa während eines Telefonanrufs (eines Calls) zuerst auf bestimmte Kriterien hin untersucht werden. Bei den Kriterien kann es sich beispielsweise 1) um die Feldstärke und Timing Advance zu der Serving Cell und 2) den Wechsel der Feldstärke von Nachbarzellen handeln. Vorteilhaft werden die dabei gefunden Muster, vorzugsweise n > 2, mit der größten Häufigkeit verwendet, um die Häufung über mehrere Endgeräte - gegebenenfalls gleichen Typs, und übergreifend über mehrere Typen, wie oben geschildert - zu finden. Vorteilhaft sind dabei solche Endgeräte, die mehrere der in Frage kommenden Muster und deren Abfolge, vorteilhaft pro Call, aufweisen. Die daraus resultierenden Muster werden dann jeweils einem Positionsbereich zugeordnet.

Vorteilhaft kann vorgesehen sein, dass bei Feststellung einer Parameteränderung zwischen zwei aufeinanderfolgenden Übertragungen von Netzwerkparameterdaten um einen vorgegebenen Prozentsatz, dem Wert der Parameteränderung und/oder den zuletzt übertragenen Netzwerkparameterdaten eine geographische Position zugeordnet wird. Dabei kann der vorgegebene Prozentsatz je nach Parametertyp unterschiedlich sein. Beispielsweise kann vorgesehen sein, dass bei Feststellung einer Parameteränderung um einen Prozentsatz von mehr als 10%, vorteilhaft von mehr als 30%, bevorzugt von mehr als 50%, beispielsweise von mehr als 70%, eine geographische Position zugeordnet wird.

Vorzugsweise kann vorgesehen sein, dass die Werte einer erfassten Parameteränderung vor der Zuordnung einer geographischen Position in einer Datei abgelegt werden. Wenn beispielsweise eine Parameteränderung in Form einer Signaländerung festgestellt wird, kann diese in einer Datei, etwa einer entsprechenden Liste, abgelegt werden, bevor die Zuordnung einer Position erfolgt.

Grundsätzlich ist die Erfindung nicht auf bestimmte Varianten beschränkt wie eine solche Positionszuordnung erfolgen kann. Vorteilhaft kann die Zuordnung der geographischen Position mittels Erzeugung von positionsbasierten Referenzparameterwerten und/oder mittels eines Berechnungsverfahrens erfolgen. Wenn positionsbezogene Referenzparameterwerte erzeugt werden sollen, kann beispielsweise ein Testfahrzeug mit einer geeigneten Messeinrichtung verwendet werden. Ein solches Fahrzeug kann mit einer Positionsbestimmungseinrichtung, beispielsweise einer GPS-Einrichtung, und einem mobilen elektronischen Endgerät, beispielsweise einem Mobiltelefon, ausgestattet sein. Mit dem elektronischen Endgerät können Parameteränderungen erfasst und über die Positionsbestimmungseinrichtung mit einer geographischen Position verknüpft werden. Die Parameteränderung wird dann mit den in der netzwerkseitig vorgehaltenen Rechnereinheit abgelegten Parameteränderungen verglichen. Findet sich eine entsprechende Parameteränderung in der Rechnereinheit wieder, kann auch dieser der über das Testfahrzeug ermittelte Positionswert zugeordnet werden. Wenn die Zuordnung über ein Berechnungsverfahren erfolgen soll, kann dies beispielsweise mittels eines Simulationsverfahrens geschehen. Beispielsweise könnte auch vorgesehen sein, dass eine Zuordnung von einer geographischen Position mit Hilfe des Mobilfunknetzplans und der Kenntnis der Strahlrichtung erfolgen kann.

Vorzugsweise kann die Zuordnung der geographischen Position mittels eines Simulationsverfahrens erfolgen, bei dem ein Vergleich mit der in 3D-Modellen simulierten Ausbreitung der Strahlung erfolgt. Anders ausgedrückt, durch einen Vergleich mit der in 3D-Modellen simulierten Ausbreitung der Strahlung kann eine automatische Generierung der Position erlangt werden.

Gemäß einem zweiten Aspekt der Erfindung wird ein Verfahren zum Bereitstellen einer geographischen Struktur zum Erzeugen von Verkehrsinformationen bereitgestellt, das durch folgende Schritte gekennzeichnet ist: a) Erzeugen von geographischen Identifikationspunkten mittels eines wie vorstehend beschriebenen erfindungsgemäßen Verfahrens zum Erzeugen von geographischen Identifikationspunkten; und b) Übertragen der geographischen Identifikationspunkte in eine digitale Straßenkarte.

Um Verkehrsinformationen, beispielsweise eine Staumeldung, generieren zu können, müssen die erzeugten geographischen Identifikationspunkte verwendet werden, die auf einer zu untersuchenden Route liegen. Zu einer weiteren Punktefindung kann auch ein so genannten Location Area Update herangezogen werden. Die Qualität der Identifikationspunkte kann beispielsweise über ein Histogramm der Differenzzeiten überprüft werden. Die Nutzung eines Histogramms ist beispielsweise im Zusammenhang mit der EP 1 435 080 B1 beschrieben, deren Offenbarungsgehalt in soweit in die Beschreibung der vorliegenden Erfindung mit einbezogen wird. Bei Straßen ergeben sich beispielsweise nach unterschiedlichen Typen unterschiedliche Verteilungen, etwa zwei Peaks auf Autobahnen, einer für PKW und einer für LKW.

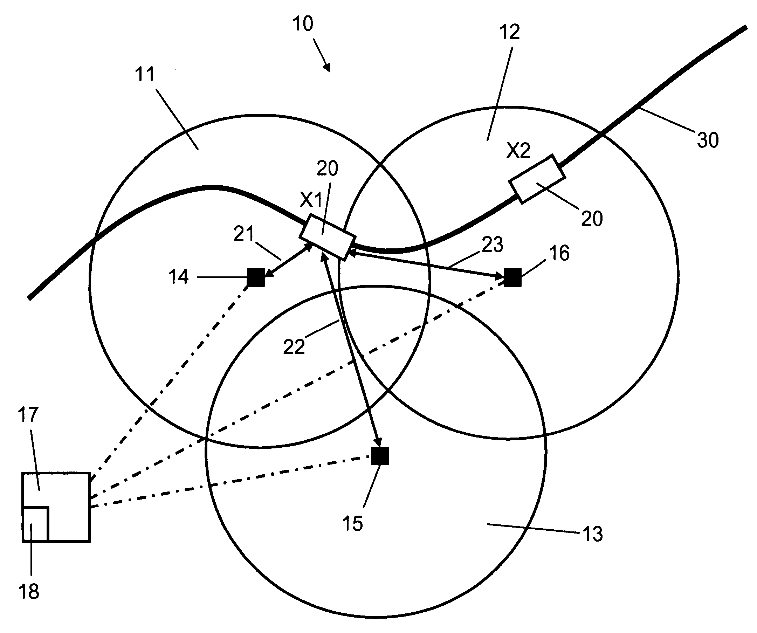

Die Erfindung wird nun anhand eines Ausführungsbeispiels unter Bezugnahme auf die beiliegende Zeichnung näher erläutert. Dabei zeigt die einzige Figur in schematischer Darstellung ein Mobilfunknetz, in dem die erfindungsgemäßen Verfahren ablaufen können.

Das in der Figur dargestellte zellulare Mobilfunknetz 10, besteht aus einer Anzahl von Funkzellen, wobei der besseren Übersicht halber nur drei Funkzellen 11, 12, 13 dargestellt sind, um das Wesen der vorliegenden Erfindung zu verdeutlichen. Jeder Funkzelle 11, 12, 13 ist eine Basisstation 14, 15, 16 zugeordnet. Die Basisstationen 14, 15, 16 kommunizieren mit einer netzwerkseitig vorgesehenen Rechnereinheit 17, im vorliegenden Beispiel einem so genannten Basisstationen-Kontroller.

In dem Mobilfunknetz 10 sind mobile elektronische Endgeräte registriert, beispielsweise in Form von Mobiltelefonen. Der besseren Übersicht halber ist im dargestellten Beispiel nur ein mobiles elektronisches Endgerät 20 dargestellt, allerdings an verschiedenen Positionen.

Die einzelnen Funkzellen 11, 12, 13 überlagern eine digitale Straßenkarte 30, wobei der besseren Übersicht halber nur eine einzige Straße dargestellt ist.

Um Verkehrsinformationen erzeugen zu können, müssen zunächst eine Reihe eindeutiger geographischer Identifikationspunkte X1, X2 erzeugt werden. Diese müssen dann mit der digitalen Straßenkarte 30 derart in Übereinstimmung gebracht werden, dass sie auf einer Route, beispielsweise einem Straßenverlauf liegen.

Zur Erzeugung der geographischen Identifikationspunkte X1, X2 wird das Mobilfunknetz 10 herangezogen. Dies geschieht anhand der so genannten Netzwerk-Messreports. Diese Netzwerk-Messreports enthalten unter anderem das sogenannte Timing Advance (TA) und die Empfangsfeldstärken der verbundenen Funkzelle sowie den zugehörigen Nachbarfunkzellen. Vorteilhafterweise werden nun diese Daten genutzt, um den geographischen Aufenthaltsort des mobilen Endgerätes 20 zu bestimmen.

Bisher war es im Stand der Technik üblich, dass ein Testfahrzeug verwendet wurde. Dieses war zum einen mit einer Positionsbestimmungseinrichtung, etwa einer GPS-Einrichtung, und zum anderen mit einem mobilen elektronischen Endgerät, beispielsweise einem Mobiltelefon oder einem Mobilfunkmodul, ausgestattet. Wenn das mobile Endgerät 20 in Betrieb ist, beispielsweise wenn damit telefoniert wird, erfolgt eine Kommunikation mit den Basisstationen 14, 15, 16. Dabei werden in bestimmten Zeitabständen Netzwerkparameterdaten 21, 22, 23, beispielsweise in Form der Netzwerk-Messreports, übertragen. Dabei kann das gleichzeitige Empfangen von Feldstärken von mehreren Basisstationen, beispielsweise bis zu sechs Basisstationen, erfolgen. Es kann der Empfang von bis zu sechs BTS und der sogenannten Serving Cell in GSM erfolgen, die eigentliche Kommunikation, nämlich das Senden von NMR und das eigentlich Gespräch, erfolgt aber nur über die Serving Cell, die im Ablauf natürlich wechseln. Aber es gilt natürlich BTS1 oder BTS2 hinsichtlich der eigentlichen Kommunikation. Bei UMTS ist dies anders. Dort wird bei entsprechender Kapazität über zwei Node Bs parallel kommuniziert und danach wieder die Information zusammengesetzt, was zu einer Qualitätsverbesserung) führt. Man konnte also für jeden geographischen Punkt X1, X2 ein bestimmtes Muster von Signalstärken messen. Diese Muster wurden dann in einer der Rechnereinheit 17 zugeordneten zentralen Datei 18 abgespeichert. Wenn dann später das Muster eines anderen mobilen Endgeräts erkannt wurde, fand ein Vergleich mit den in der Rechnereinheit 17 abgespeicherten Mustern statt, und es war möglich zu bestimmen, an welchem Ort sich das mobile Endgerät befand. Eine Ortsbestimmung war auch aus einer Entwicklung von Übergängen möglich.

Diese im Stand der Technik bekannte Lösung hatte jedoch den Nachteil, dass unterschiedliche Typen von mobilen Endgeräten an ein und demselben Ort unterschiedliche Signalstärkenmessungen aufweisen, so dass an ein und demselben Ort unterschiedliche Muster für unterschiedliche Endgeräte bestehen konnten.

Mit der vorliegenden Erfindung können nun diese Nachteile vermieden werden. Dies erfolgt dadurch, dass die Musteridentifizierung und Musterbestimmung von der Straße 30 in das Mobilfunknetz 10, insbesondere in die Rechnereinheit 17, etwa einen Base-Station-Controller (BSC), verlagert wird. Dies geschieht folgendermaßen:
Die Netzwerk-Messreports, beispielsweise deren Signalstärken, von allen elektronischen Endgeräten 20 laufen in zeitlichen Abständen von etwa 0,5 Sekunden über die Basisstationen 14, 15, 16 bei der Rechnereinheit 17 ein, beispielsweise um festzustellen, welche der Funkzellen 11, 12, 13 für ein Endgerät 20 gerade zuständig ist. Das Endgerät 20 kommuniziert dazu mit den Basisstationen 14, 15, 16, was durch die Pfeile 21, 22, 23 dargestellt ist. Die Basisstationen 14, 15, 16 wiederum kommunizieren mit der netzwerkseitigen Rechnereinheit 17, beispielsweise dem Base-Station-Controller, was durch die gestrichelten Linien dargestellt ist.

Die Netzwerk-Messreports werden nun in besonderer Weise ausgewertet. Beispielsweise kann die Auswertung nach signifikanten Änderungen der Signalstärken erfolgen, die beispielsweise durch eine Abdeckung, etwa durch ein Haus, durch die Einfahrt in einen Tunnel, oder dergleichen zustande kommen können. Wenn eine solche Signaländerung festgestellt wird, kann diese beispielsweise zunächst in einer Datei abgespeichert werden.

Nun muss der Signaländerung noch ein Positionswert zugeordnet werden. Dies könnte beispielsweise wieder mit einem entsprechend ausgerüsteten Testfahrzeug erfolgen. Mit dem Testfahrzeug können dann wiederum Signalstärken aufgenommen werden, die mit einer geographischen Position verknüpft werden. Findet man eine Übereinstimmung zwischen einer derart gemessenen Signalstärke und einer in der Datei bereits abgespeicherten Signalstärke, kann der in der Datei abgespeicherten Signalstärke der entsprechend im Testfahrzeug gemessene Positionswert zugeordnet werden. Alternativ könnte die Positionszuordnung auch über ein Berechnungsverfahren, etwa ein Simulationsverfahren, erfolgen.

Die netzwerkseitig in der Datei abgespeicherte Signalstärke, der eine geographische Position zugeordnet wurde, wird nunmehr in Form eines geographischen Identifikationspunktes X1, X2 in einer zentralen Datei 18 der Rechnereinheit 17 abgespeichert. Bei den geographischen Identifikationsdaten X1, X2 handelt es sich somit um Wertepaare "Signalstärke an einem bestimmten Ort".

Die geographischen Identifikationsdaten X1, X2 können dann in eine digitale Straßenkarte 30 übertragen werden, so dass sie bestimmte Punkte auf einer Straße, und damit auf einer Route bilden können. Die geographischen Identifikationspunkte X1, X2 können dann auch zur Verkehrsbestimmung herangezogen werden.

Wenn das mobile Endgerät 20 die Netzwerk-Messreports überträgt, werden neben der Signalstärke auch das Endgerät eindeutig charakterisierende Informationen mit übertragen. Die in der Rechnereinheit 17 eingehenden Signalstärken werden mit den in der zentralen Datei 18 befindlichen Signalstärken verglichen. Bei Feststellung einer Übereinstimmung wird die von dem Endgerät 20 übertragene Signalstärke mit dem der in der zentralen Datei 18 abgespeicherten Signalstärke zugeordneten Positionswert verknüpft, um die aktuelle Position des Endgeräts 20 auf einer Straße 30 zu bestimmen.

Wenn die Fortbewegungszeit des mobilen elektronischen Endgeräts 20 zwischen einem Ausgangspunkt X1 und einem räumlich davon getrennten Endpunkt X2 ermittelt werden soll, werden die netzwerkseitig eingehenden Netzwerkparameterdaten, denen nunmehr eine eindeutige Position zugeordnet werden konnte, zusätzlich mit einer entsprechenden Zeitmarke versehen. Aus der Differenz der Zeitmarken wird die dazwischen liegende Zeit berechnet, bei der es sich um die Fortbewegungszeit handelt.

Die vorliegende Erfindung betrifft insbesondere ein Verfahren zum Erzeugen von geographischen Identifikationspunkten X1, X2, insbesondere für den Einsatz bei der Erzeugung von Verkehrsinformationen, unter Nutzung eines aus Funkzellen 11, 12, 13 aufgebauten zellularen Mobilfunknetzes 10, wobei dem Mobilfunknetz 10 eine Anzahl mobiler elektronischer Endgeräte 20 zugeordnet ist und wobei während des Betriebs der mobilen elektronischen Endgeräte 20 in zeitlichen Abständen Netzwerkparameterdaten 21, 22, 23, insbesondere in Form von Netzwerk-Messreports (Network Measurement Reports - NMR), von den elektronischen Endgeräten 20 übertragen werden. Um eindeutige geographische Identifikationspunkte erzeugen zu können, ist vorgesehen, dass die geographischen Identifikationspunkte X1, X2 netzwerkseitig aus den übertragenen Netzwerkparameterdaten 21, 22, 23 der mobilen elektronischen Endgeräte 20 erzeugt werden, dass die übertragenen Netzwerkparameterdaten 21, 22, 23 der mobilen elektronischen Endgeräte 20 netzwerkseitig in einer Rechnereinheit 17 auf wenigstens einen bestimmten Parameter überprüft werden, dass bei Feststellung einer Parameteränderung zwischen zwei aufeinanderfolgenden Übertragungen von Netzwerkparameterdaten 21, 22, 23 um einen vorgegebenen Wert, der Parameteränderung und/oder den zuletzt übertragenen Netzwerkparameterdaten eine geographische Position zugeordnet wird und dass die mit einer geographischen Position verknüpften Werte der Parameteränderung und/oder der zuletzt übertragenen Netzwerkparameterdaten als geographische Identifikationspunkte in einer zentralen Datei 18 abgespeichert werden.

### Bezugszeichenliste

- 10: Mobilfunknetz
- 11: Funkzelle
- 12: Funkzelle
- 13: Funkzelle
- 14: Basisstation
- 15: Basisstation
- 16: Basisstation
- 17: Rechnereinheit (Base Station Controller)
- 18: Zentrale Datei

- 20: Mobiles elektronisches Endgerät (Mobiltelefon)
- 21: Übertrag von Netzwerkparametern
- 22: Übertrag von Netzwerkparametern
- 23: Übertrag von Netzwerkparametern

- 30: Digitale Straßenkarte

- X1: Geographischer Identifikationspunkt
- X2: Geographischer Identifikationspunkt

## Patentansprüche

1. Verfahren zum Erzeugen von geographischen Identifikationspunkten (X1, X2), unter Nutzung eines aus Funkzellen (11, 12, 13) aufgebauten zellularen Mobilfunknetzes (10), wobei dem Mobilfunknetz (10) eine Anzahl mobiler elektronischer Endgeräte (20) zugeordnet ist und wobei in zeitlichen Abständen Netzwerkparameterdaten (21, 22, 23) von den elektronischen Endgeräten (20) übertragen werden, **dadurch gekennzeichnet, dass** die geographischen Identifikationspunkte (X1, X2) netzwerkseitig aus den übertragenen Netzwerkparameterdaten (21, 22, 23) der mobilen elektronischen Endgeräte (20) erzeugt werden, dass die übertragenen Netzwerkparameterdaten (21, 22, 23) der mobilen elektronischen Endgeräte (20) auf wenigstens einen bestimmten Parameter überprüft werden, dass bei Feststellung einer Parameteränderung zwischen zwei Übertragungen von Netzwerkparameterdaten (21, 22, 23) um einen vorgegebenen Wert, der Parameteränderung und/oder den zuletzt übertragenen Netzwerkparameterdaten eine geographische Position zugeordnet wird und dass die mit der geographischen Position verknüpften Werte der. Parameteränderung und/oder der zuletzt übertragenen Netzwerkparameterdaten als geographische Identifikationspunkte in einer Datei (18) abgespeichert werden.

2. Verfahren nach Anspruch 1, **dadurch gekennzeichnet, dass** die übertragenen Netzwerkparameterdaten (21, 22, 23) der mobilen elektronischen Endgeräte (20) netzwerkseitig in der Rechnereinheit (17) auf die Häufigkeit des Vorhandenseins des wenigstens einen bestimmten Parameters überprüft werden, und dass bei Erreichen oder Überschreiten eines bestimmten Häufigkeitsschwellwerts die übertragenen Netzwerkparameterdaten (21, 22, 23) der mobilen elektronischen Endgeräte (20) netzwerkseitig in der Rechnereinheit (17) auf Änderungen des wenigstens einen bestimmten Parameters überprüft werden.

3. Verfahren nach Anspruch 1 oder 2, **dadurch gekennzeichnet, dass** die übertragenen Netzwerkparameter (21, 22) die IMEI-Nummern der mobilen elektronischen Endgeräte (20) umfassen, dass über die IMEI-Nummern Gerätetypen identifiziert werden und dass diese Informationen bei der Erzeugung der geographischen Identifikationspunkte (X1, X2) ebenfalls verwendet werden.

4. Verfahren nach einem der Ansprüche 1 bis 3, **dadurch gekennzeichnet, dass** die übertragenen Netzwerkparameterdaten (21, 22, 23) der mobilen elektronischen Endgeräte (20) netzwerkseitig auf mehr als einen bestimmten Parameter überprüft werden.

5. Verfahren nach einem der Ansprüche 1 bis 4, **dadurch gekennzeichnet, dass** die übertragenen Netzwerkparameterdaten der mobilen elektronischen Endgeräte netzwerkseitig auf Signalstärke überprüft werden.

6. Verfahren nach einem der Ansprüche 1 bis 5, **dadurch gekennzeichnet, dass** bei Feststellung einer Parameteränderung zwischen zwei aufeinanderfolgenden Übertragungen von Netzwerkparameterdaten um einen vorgegebenen Prozentsatz, dem Wert der Parameteränderung und/oder den zuletzt übertragenen Netzwerkparameterdaten eine geographische Position zugeordnet wird.

7. Verfahren nach einem der Ansprüche 1 bis 6, **dadurch gekennzeichnet, dass** die Werte einer erfassten Parameteränderung vor der Zuordnung einer geographischen Position in einer Datei abgelegt werden.

8. Verfahren nach einem der Ansprüche 1 bis 7, **dadurch gekennzeichnet, dass** die Zuordnung der geographischen Position mittels Erzeugung von positionsbasierten Referenzparameterwerten und/oder mittels eines Berechnungsverfahrens erfolgt.

9. Verfahren nach Anspruch 8, **dadurch gekennzeichnet, dass** die Zuordnung der geographischen Position mittels eines Simulationsverfahrens erfolgt, bei dem ein Vergleich mit der in 3D-Modellensimulierten Ausbreitung der Strahlung erfolgt.

10. Verfahren nach einem der Ansprüche 1 bis 9, **dadurch gekennzeichnet, dass** dieses für den Einsatz bei der Erzeugung von Verkehrsinformationen ausgebildet ist.

11. Verfahren zum Bereitstellen eines Systems zum Erzeugen von Verkehrsinformationen, **gekennzeichnet durch** folgende Schritte: a) Erzeugen von geographischen Identifikationspunkten (X1, X2) mittels eines Verfahrens gemäß einem der Ansprüche 1 bis 10; und b) Übertragen der geographischen Identifikationspunkte (X1, X2) in eine digitale Straßenkarte (30).

## Claims

1. A method for generating geographical identification points (X1, X2), using a cellular mobile radio network (10) being built of radio cells (11, 12, 13), wherein a number of mobile electronic devices (20) is assigned to said mobile radio network (10) and wherein network parameter data (21, 22, 23) being transmitted from the electronic devices (20) in time intervals, **characterized in that** the geographical identification points (X1, X2) being generated from the transmitted network parameter data (21, 22, 23) of the mobile electronic devices (20) on the network side, that the transmitted network parameter data (21, 22, 23) of the mobile electronic devices (20) being checked on at least one specific parameter, that upon an identification of a parameter change about a predetermined value between two transmissions of network parameter data (21, 22, 23), a geographical position being assigned to the parameter change and/or to the last transmitted network parameter data and that the values of the parameter change and/or the last transmitted network data which are associated with the geographical position, being stored in a data file (18) as geographical identification points.

2. The method according to claim 1, **characterized in that** the transmitted network parameter data (21, 22, 23) of the mobile electronic devices (20) being checked in the computer unit (17) on the network side on the frequency of the presence of the at least one specific parameter and that upon reaching or exceeding a given frequency threshold value the transmitted network parameter data (21, 22, 23) of the mobile electronic devices (20) being checked on changes of the at least one specific parameter at the computer unit (17) on the network side.

3. The method according to claim 1 or 2, **characterized in that** the transmitted network parameter data (21, 22) comprise the IMEI-numbers of the mobile electronic devices (20), that device types being identified via said IMEI-numbers and that this information is being used in the generation of the geographical identification points (X1, X2) as well.

4. The method according to anyone of claims 1 to 3, **characterized in that** the transmitted network parameter data (21, 22, 23) of the mobile electronic devices (20) are being checked on more than one specific parameter on the network side.

5. The method according to anyone of claims 1 to 4, **characterized in that** the transmitted network parameter data of the mobile electronic devices being checked on the network side on the signal strength.

6. The method according to anyone of claims 1 to 5, **characterized in that** upon an identification of a parameter change about a predefined percentage between two subsequent transmissions of network parameter data, a geographical position being assigned to the value of the parameter change and/or to the last transmitted network parameter data.

7. The method according to anyone of claims 1 to 6, **characterized in that** the values of an identified parameter change being stored in a data file prior to the assignment of a geographical position.

8. The method according to anyone of claims 1 to 7, **characterized in that** the assignment of the geographical position is being effected by means of generating position-based reference parameter values and/or by means of a calculation method.

9. The method according to claim 8, **characterized in that** the assignment of the geographical position is being effected by means of a simulation method, in which a comparison takes place with the 3D model simulated propagation of the radiation.

10. The method according to anyone of claims 1 to 9, **characterized in that** the method is developed for being used in the generation of traffic information.

11. A method of providing a system for generating traffic information,
**characterized by** the following steps: a) generating geographical identification points (X1, X2) by use of a method according to anyone of claims 1 to 10; and b) transmitting the geographical identification points (X1, X2) into a digital road map (30).

## Revendications

1. Procédé servant à produire des points d'identification géographiques (X1, X2) en utilisant un réseau de téléphonie mobile (10) cellulaire élaboré à partir de cellules radio (11, 12, 13), sachant qu'un nombre de terminaux (20) électroniques mobiles est associé au réseau de téléphonie mobile (10) et sachant que des données de paramètre de réseau (21, 22, 23) sont transférées à des intervalles de temps par les terminaux (20) électroniques, **caractérisé en ce que** les points d'identification géographiques (X1, X2) sont produits côté réseau à partir des données de paramètre de réseau (21, 22, 23) transférées des terminaux (20) électroniques mobiles, **en ce qu'**au moins un paramètre défini des données de paramètre de réseau (21, 22, 23) transférées des terminaux (20) électroniques mobiles est vérifié, **en ce qu'**en cas de constatation d'une modification de paramètre entre deux transferts de données de paramètre de réseau (21, 22, 23) d'une valeur spécifiée une position géographique est associée à la modification de paramètre et/ou aux données de paramètre de réseau transférées en dernier lieu, et **en ce que** les valeurs, combinées à la position géographique, de la modification de paramètre et/ou des données de paramètre de réseau transférées en dernier lieu sont enregistrées en tant que points d'identification géographiques dans un fichier (18).

2. Procédé selon la revendication 1, **caractérisé en ce que** la fréquence de la présence du paramètre défini au moins au nombre de un des données de paramètre de réseau (21, 22, 23) transférées des terminaux (20) électroniques mobiles est vérifiée côté réseau dans l'unité de calcul (17), et **en ce que** lorsqu'une valeur seuil de fréquence définie est atteinte ou est dépassée, des modifications du paramètre au moins au nombre de un des données de paramètre de réseau (21, 22, 23) transférées des terminaux (20) électroniques mobiles sont vérifiées côté réseau dans l'unité de calcul (17).

3. Procédé selon la revendication 1 ou 2, **caractérisé en ce que** les paramètres de réseau (21, 22) transférés incluent les numéros IMEI des terminaux (20) électroniques mobiles, **en ce que** des types d'appareil sont identifiés par l'intermédiaire des numéros IMEI, et **en ce que** lesdites informations sont utilisées également lors de la production des points d'identification géographiques (X1, X2).

4. Procédé selon l'une quelconque des revendications 1 à 3, **caractérisé en ce que** plus d'un paramètre défini des données de paramètre de réseau (21, 22, 23) transférées des terminaux (20) électroniques mobiles est vérifié.

5. Procédé selon l'une quelconque des revendications 1 à 4, **caractérisé en ce que** l'intensité de signal des données de paramètre de réseau transférées des terminaux électroniques mobiles est vérifiée côté réseau.

6. Procédé selon l'une quelconque des revendications 1 à 5, **caractérisé en ce que** dans le cas de la constatation d'une modification de paramètre entre deux transferts consécutifs de données de paramètre de réseau d'un taux en pourcentage spécifié, une position géographique est associée à la valeur de la modification de paramètre et/ou aux données de paramètre de réseau transférées en dernier lieu.

7. Procédé selon l'une quelconque des revendications 1 à 6, **caractérisé en ce que** les valeurs d'une modification de paramètre détectée sont enregistrées avant l'association à une position géographique dans un fichier.

8. Procédé selon l'une quelconque des revendications 1 à 7, **caractérisé en ce que** l'association de la position géographique est effectuée au moyen de la production de valeurs de paramètre de référence basées sur la position et/ou au moyen d'un procédé de calcul.

9. Procédé selon la revendication 8, **caractérisé en ce que** l'association de la position géographique est effectuée au moyen d'un procédé de simulation, dans le cadre duquel une comparaison avec la propagation, simulée par modélisation en 3D, du rayonnement.

10. Procédé selon l'une quelconque des revendications 1 à 9, **caractérisé en ce que** ledit procédé est réalisé pour être utilisé lors de la production d'informations relatives au trafic.

11. Procédé servant à fournir un système servant à produire des informations relatives au trafic, **caractérisé par** les étapes suivantes consistant à : a) produire des points d'identification géographiques (X1, X2) au moyen d'un procédé selon l'une quelconque des revendications 1 à 10 ; et b) transférer les points d'identification géographiques (X1, X2) sur une carte routière numérique (30).
